# EUROPÄISCHE PATENTSCHRIFT

(11) **EP 0 561 112 B1**
(45) Veröffentlichungstag und Bekanntmachung des Hinweises auf die Patenterteilung: **07.06.1995**
(21) Anmeldenummer: 93100373.5
(22) Anmeldetag: 13.01.1993
(51) Int. Cl.: F16B 13/06

(54) **Spreizdübel mit einem Spreizkörper**
Expansion plug having an expandible element
Cheville expansible ayant un élément d'expansion

(30) Priorität: 14.03.1992 DE 4208016
(43) Veröffentlichungstag der Anmeldung: 22.09.1993
(73) Patentinhaber: fischerwerke Artur Fischer GmbH & Co. KG, D-72178 Waldachtal (DE)
(72) Erfinder: Fischer, Artur, Prof. Dr. h. c., W-7244 Waldachtal 3/Tumlingen (DE)

(56) Entgegenhaltungen:
- EP-A- 0 188 172
- EP-A- 0 308 594

## Beschreibung

Die Erfindung betrifft einen Spreizdübel mit einem Spreizkörper gemäß der Gattung des Anspruches 1.

Aus der EP-B-0 308 594 ist ein Spreizdübel bekannt, der einen konischen Spreizkörper besitzt, welcher in eine metallische Spreizhülse einziehbar ist. Um die Gleitfähigkeit der Spreizhülse im Bereich des Spreizkörpers zu erhöhen, ist ein Gleitring vor dem Spreizkörper angeordnet. Beim Eindringen des Spreizkörpers in die Spreizhülse verfließt das Material des Gleitringes derart, daß ein Gleitfilm im Bereich des konischen Spreizkörpers entsteht.

Der Erfindung liegt die Aufgabe zugrunde, einen Spreizdübel mit einem Spreizkörper so auszubilden, daß mittels eines Gleitrings über den gesamten Spreizkörper gute Gleiteigenschaften für die Spreizhülse gewährleistet sind.

Die Lösung dieser Aufgabe erhält man durch die im Anspruch 1 angegebenen Merkmale. Der Spreizkörper ist treppenförmig profiliert, d. h. er besitzt vorzugsweise Ringstufen oder ein sich nach außen im Durchmesser erweiterndes Gewinde. Ein den Gleitkörper umschließender Gleitring ist entsprechend profiliert, so daß dieser formschlüssig auf dem Spreizkörper gelagert ist. Beim Aufschieben der Spreizhülse oder beim Einziehen des Spreizkörpers in die Spreizhülse ist sichergestellt, daß der Gleitring nicht wegrutscht und das Kunststoffmaterial des Gleitringes auch nicht undefiniert verpreßt und weggedrückt wird.

Besonders vorteilhaft ist es dabei, die Materialstärke des Gleitringes im Bereich der äußeren Kanten der einzelnen Ringstufen verhältnismäßig dünn auszubilden, wodurch eine unerwünschte radiale Elastizität vermieden wird. Dadurch läßt sich der Spreizdübel in einem Bohrloch durch Aufweiten der Spreizhülse mit hohem Spreizdruck an der Bohrlochwandung eines Mauerwerks verspannen. Die Materialstärke des Gleitringes ist dabei an allen Außenrändern der Ringstufen vorzugsweise gleich gering und kann beispielsweise weniger als einen Millimeter betragen.

Der aus Kunststoff hergestellte Gleitring ist vorzugsweise mit einem Längsschlitz versehen, damit der Gleitring aufgebogen und seitlich auf den Spreizkörper aufgesetzt werden kann. Aufgrund seiner Elastizität verspannt sich dann der Gleitring am Spreizkörper.

Die Erfindung wird nachfolgend anhand von in der Zeichnung dargestellten Ausführungsbeispielen näher erläutert.

Es zeigen:
- Figur 1: einen als Befestigungsanker ausgebildeten Spreizdübel im Querschnitt im Bereich der Spreizhülse und
- Figur 2: einen Spreizdübel in einem Bohrloch eines Mauerwerks vor dem Aufspreizen der Spreizhülse.

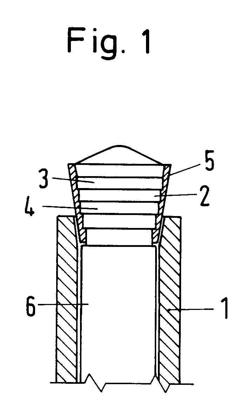

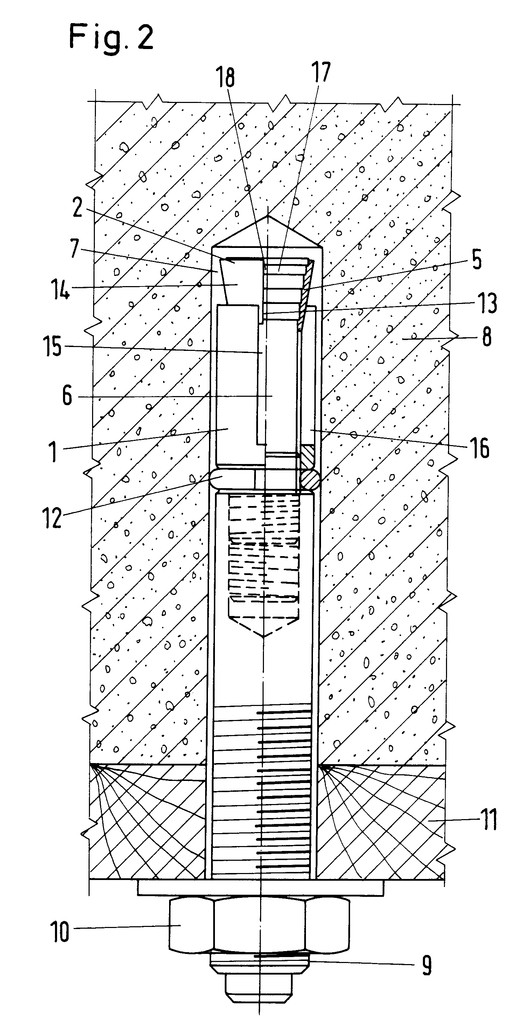

Der in Figur 1 teilweise im Schnitt dargestellte Spreizdübel kann Teil eines Verbundankers sein, welcher mittels eines in ein Bohrloch eines Mauerwerks einbringbaren Klebemittels verankert werden kann. Es kann sich dabei jedoch auch um einen Spreizdübel handeln, der eine Spreizhülse 1 besitzt, die auf einen Spreizkörper 2 auftreibbar ist und sich dabei so aufweitet, daß sich der Spreizdübel in einem Bohrloch verspannt. Weiterhin besteht die Möglichkeit, daß der Spreizkörper 2 nach unten in die Spreizhülse 1 eingezogen wird, wobei sich diese aufweitet und im Bohrloch verspannt, wie dies bei dem in Figur 2 dargestellten Ausführungsbeispiel vorgesehen ist.

Der Spreizdübel gemäß Figur 1 besitzt einen Spreizkörper 2 mit mehreren Ringstufen 3, 4, auf denen ein Gleitring 5 aus Kunststoff gelagert ist. Der Gleitring 5 ist längsgeschlitzt, damit er seitlich auf den Spreizkörper 2 aufsetzbar ist. Die Spreizhülse 1 ist ebenfalls mit hier nicht sichtbaren Längsschlitzen versehen, damit beim Aufschieben auf den Spreizkörper 5 eine Aufweitung der Spreizhülse 1 möglich ist.

Die Spreizhülse 1 lagert auf dem Dübelschaft 6, der ebenso wie die Spreizhülse 1 nur teilweise dargestellt ist.

In Figur 2 ist ein Spreizdübel dargestellt, der in ein Bohrloch 7 eines Mauerwerks 8 eingesetzt ist. Am nach außen geführten Ende des Spreizdübels ist auf ein Gewinde 9 eine Schraubenmutter 10 aufgeschraubt, die ein Holzteil 11 an der Wandoberfläche 12 des Mauerwerks 8 halten soll. Zu diesem Zweck muß die Schraubenmutter 10 angezogen werden, so daß der Dübelschaft 6 nach unten gezogen wird und der Spreizkörper 2 in die Spreizhülse 1 eindringt. Mittels eines Fixierringes 12 bleibt die Spreizhülse 1 ortsfest im Bohrloch 7 während des Spreizvorgangs positioniert.

Der Gleitring 5 verringert die Reibung zwischen Spreizkörper 2 und Spreizhülse 1 während des Aufspreizvorganges, währenddessen die konisch sich erweiternde Innenfläche 13 der Spreizhülse 1 an der konischen Außenfläche 14 des Gleitringes 5 anliegt.

In der hier dargestellten Zeichnung sind Längsschlitze 15, 16 der Spreizhülse 1 ersichtlich.

Der Gleitring 5 ist in Figur 2 ebenso mit einem stufigen Innenprofil versehen, wie der in Figur 1 dargestellte Gleitring 5. Die Materialstärke des Gleitringes 5 ist im Bereich der Außenränder 17 verhältnismäßig gering und kann beispielsweise nur einen Millimeter oder auch weniger betragen. Weiterhin ist an dem hier dargestellten Gleitring 5 der durchgehende Längsschlitz 18 ersichtlich.

## Patentansprüche

1. Spreizdübel mit einem Spreizkörper, der am einen Ende des Dübelschaftes angeordnet ist, und mit einem am anderen Ende des Dübelschaftes als Schraube oder dgl. ausgebildeten Befestigungsmittel, an dessen Spreizkörper ein Gleitring mit konischem Außenprofil angeordnet ist, über den eine Spreizhülse, deren Innenfläche sich an dem dem Spreizkörper zugewandten Ende konisch erweitert, auf den Spreizkörper aufschiebbar ist, **dadurch gekennzeichnet**, daß der Spreizkörper (2) sich zu seinem freien Ende hin in Ringstufen (3, 4) oder in Form eines sich im Durchmesser vergrößernden Gewindes erweitert und der Gleitring (5) ein in das Profil des Spreizkörpers (2) eingreifendes Innenprofil hat.

2. Spreizdübel nach Anspruch 1, **dadurch gekennzeichnet**, daß der Gleitring (5) im Bereich der Außenränder der Ringstufen (3, 4) eine sehr geringe Materialstärke hat.

3. Spreizdübel nach Anspruch 2, **dadurch gekennzeichnet**, daß die Materialstärke des Gleitringes (5) an allen Außenrändern der Ringstufen (3, 4) gleich gering ist.

4. Spreizdübel nach einem der vorhergehenden Ansprüche, **dadurch gekennzeichnet**, daß der Gleitring (5) einen durchgehenden Längsschlitz hat.

5. Spreizdübel nach einem der vorhergehenden Ansprüche, **dadurch gekennzeichnet**, daß der Gleitring (5) ein Kunststoffteil ist.

## Claims

1. An expansible plug with an expander body, which is arranged at one end of the plug shank, and with a fixing means in the form of a screw or the like at the other end of the plug shank, on the expander body of which plug there is arranged a sliding ring of conical external profile over which an expansible sleeve, the inner face of which widens conically at the end facing towards the expander body, is arranged to be pushed onto the expander body, characterized in that the expander body (2) widens towards its free end in annular steps (3, 4) or in the form of a thread increasing in diameter, and the sliding ring (5) has an internal profile engaging in the profile of the expander body (2).

2. An expansible plug according to Claim 1, characterized in that in the region of the outer edges of the annular steps (3, 4) the thickness of the material of the sliding ring (5) is very small.

3. An expansible plug according to Claim 2, characterized in that the thickness of the material of the sliding ring (5) is equally small at all outer edges of the annular steps (3, 4).

4. An expansible plug according to one of the preceding Claims, characterized in that the sliding ring (5) has a continuous elongate slit.

5. An expansible plug according to one of the preceding Claims, characterized in that the sliding ring (5) is a plastics part.

## Revendications

1. Cheville expansible comprenant un élément d'expansion disposé à l'une des extrémités du fût de la cheville, et un moyen de fixation réalisé, à l'autre extrémité du fût de la cheville, sous la forme d'une vis ou d'un organe similaire, élément d'expansion sur lequel se trouve une bague de glissement à profil extérieur tronconique, par l'intermédiaire de laquelle une douille expansible, dont la face interne s'élargit tronconiquement à l'extrémité tournée vers l'élément d'expansion, peut être enfilée sur l'élément d'expansion, caractérisée par le fait que l'élément d'expansion (2) s'élargit, en direction de son extrémité libre, en des gradins annulaires (3, 4) ou sous la forme d'un filetage de diamètre croissant, et la bague de glissement (5) présente un profil intérieur pénétrant dans le profil de l'élément d'expansion (2).

2. Cheville expansible selon la revendication 1, caractérisée par le fait que la bague de glissement (5) présente une très faible épaisseur de matériau dans la région des bords extérieurs des gradins annulaires (3, 4).

3. Cheville expansible selon la revendication 2, caractérisée par le fait que l'épaisseur du matériau de la bague de glissement (5) est d'une faible valeur identique sur tous les bords extérieurs des gradins annulaires (3, 4).

4. Cheville expansible selon l'une des revendications précédentes, caractérisée par le fait que la bague de glissement (5) comporte une fente longitudinale ininterrompue.

5. Cheville expansible selon l'une des revendications précédentes, caractérisée par le fait que la bague de glissement (5) est une pièce en matière plastique.
